# EUROPÄISCHE PATENTANMELDUNG

(11) **EP 2 767 465 A1**
(43) Veröffentlichungstag der Anmeldung: **20.08.2014**
(21) Anmeldenummer: 14153058.4
(22) Anmeldetag: 29.01.2014
(51) Int. Cl.: B62M 6/40, B62M 6/65, B62M 6/55

(54) **Fahrrad mit einem Tretkurbeltrieb und mit einem an den Tretkurbeltrieb angeschlossenen elektrischen Hilfsantrieb**

(30) Priorität: 19.02.2013 AT 501122013
(71) Anmelder: Interholz Handelsgesellschaft m.b.H., 4061 Pasching (AT)
(72) Erfinder: Stieger, Ewald, 4061 Pasching (AT)
(74) Vertreter: Hübscher, Helmut

(57) **Zusammenfassung**

Es wird ein Fahrrad mit einem Tretkurbeltrieb (12) und mit einem an den Tretkurbeltrieb (12) angeschlossenen elektrischen Hilfsantrieb beschrieben, der einen Radnabenmotor (7) mit einer Freilaufnabe für das Hinterrad (6) aufweist. Um vorteilhafte Antriebsbedingungen zu schaffen, wird vorgeschlagen, dass der Radnabenmotor (7) für das Hinterrad (6) über ein Übersetzungsgetriebe (8) mit einem elektrischen Zusatzmotor (9) gleicher Baugröße antriebsverbunden ist.

## Beschreibung

Die Erfindung bezieht sich auf ein Fahrrad mit einem Tretkurbeltrieb und mit einem an den Tretkurbeltrieb angeschlossenen elektrischen Hilfsantrieb, der einen Radnabenmotor mit einer Freilaufnabe für das Hinterrad aufweist.

Um vorteilhafte Konstruktionsverhältnisse für elektrische Hilfsantriebe bei Fahrrädern zu schaffen, ist es bekannt, einen Radnabenmotor für das Hinterrad vorzusehen, dessen Speichen direkt am Radnabenmotor angreifen. Der Tretkurbeltrieb ist mit der Freilaufnabe dieses Radnabenmotors verbunden, wobei üblicherweise ein Schaltgetriebe zwischengeschaltet ist, um für die Tretkurbel einen vorteilhaften Trittfrequenzbereich für einen vergleichsweise großen Geschwindigkeitsbereich vorsehen zu können. Dies bedeutet beim Vorsehen einer Gangschaltung, dass ein Fahrradbenützer die Gangschaltung entsprechend bedienen muss, um hinsichtlich des Tretkurbeltriebs vorteilhafte Antriebsbedingungen vorgeben zu können. Diese Schwierigkeiten können zwar durch ein Automatikgetriebe vermieden werden, doch kann auch ein Automatikgetriebe keinen Einfluss auf den sich durch die Motorbelastung aufgrund des Fahrwiderstands ergebenden Arbeitspunkt des Radnabenmotors nehmen.

Darüber hinaus ist es bekannt (US 2005/067207 A1), das Vorderrad eines Fahrrads mit einem elektrischen Hilfsantrieb zu versehen, wobei die Möglichkeit besteht, auch das Hinterrad mit einem gleichen Hilfsantrieb zu versehen. Diese Hilfsantriebe können mit umschaltbaren Untersetzungsgetrieben ausgerüstet werden, um eine weitgehende Anpassung der Hilfsantriebe an die jeweiligen Anforderungen zu ermöglichen. Mit den zusätzlichen Untersetzungsgetrieben wird allerdings der Konstruktionsaufwand erheblich vergrößert.

Der Erfindung liegt somit die Aufgabe zugrunde, einen elektrischen Hilfsantrieb für ein Fahrrad so auszugestalten, dass einerseits eine Trittfrequenz für den Tretkurbeltrieb in einem vorgegebenen Bereich eingehalten und anderseits eine automatische Anpassung des Hilfsantriebs an die jeweiligen Fahrbedingungen erreicht werden kann.

Ausgehend von einem Fahrrad der eingangs geschilderten Art löst die Erfindung die gestellte Aufgabe dadurch, dass der Radnabenmotor für das Hinterrad über ein Übersetzungsgetriebe mit einem elektrischen Zusatzmotor gleicher Baugröße antriebsverbunden ist.

Durch die starre Antriebsverbindung zwischen dem Radnabenmotor und dem Zusatzmotor unter einem vorgegebenen Übersetzungsverhältnis wird gewährleistet, dass die beiden Motoren in unterschiedlichen Arbeitsbereichen betrieben werden. Dies bedeutet bei der für die eingesetzten Radnabenmotoren üblichen Drehzahl-Drehmoment-Kennlinie, bei der die Drehzahl mit zunehmendem Drehmoment abfällt, dass einer der beiden Motoren aufgrund des Übersetzungsverhältnisses bei einem Arbeitspunkt entsprechend der niedrigeren Drehzahl und der andere Motor bei einem Arbeitspunkt entsprechend der höheren Drehzahl mit der Wirkung betrieben werden, dass der zufolge der Übersetzung mit der niedrigeren Drehzahl betriebene Motor insbesondere bei höheren Fahrgeschwindigkeiten zum Einsatz kommt, während der Motor, der bei höheren Drehzahlen betrieben wird, bei niedrigen Fahrgeschwindigkeiten zur Wirkung kommt, wenn die Drehzahl des bei niedrigeren Drehzahlen betriebenen Motors bereits unter ein Maß absinken, das einen stabilen Motorbetrieb erschwert. Durch die beiden Motoren des elektrischen Hilfsantriebs, die gleiche Baugröße, also gleiche Leistung besitzen sollen, nicht aber gleiche Bauform aufweisen müssen, wird somit gewissermaßen eine elastische, elektrische Achse geschaffen, die einen leistungsstarken Fahrbetrieb ohne ein zusätzliches Schaltgetriebe ermöglicht. Es muss lediglich dafür gesorgt werden, dass ein ausreichend großes Übersetzungsverhältnis vorliegt, um entsprechend unterschiedliche Arbeitspunkte für die beiden Motoren nützen zu können. Die Aufteilung der geforderten Antriebsleistung auf zwei Motoren gleicher Baugröße bringt darüber hinaus den Vorteil mit sich, dass kleinere Baugrößen dieser Motoren zum Einsatz kommen können.

Das Übersetzungsgetriebe könnte als Zahnradgetriebe ausgebildet werden. Einfachere Konstruktionsverhältnisse ergeben sich allerdings, wenn das Übersetzungsgetriebe als umlaufender Zugmitteltrieb ausgebildet ist, sodass für diesen Zweck bewährte Ketten- oder Zahnriementriebe zum Einsatz kommen. Wird für das Übersetzungsgetriebe ein Übersetzungsverhältnis zwischen der Drehzahl des Radnabenmotors für das Hinterrad und der Drehzahl des Zusatzmotors größer 1 vorgesehen, wird also der Radnabenmotor für das Hinterrad mit einer höheren Drehzahl betrieben, so kann das Fahrrad über den elektrischen Hilfsantrieb mit einer höheren Geschwindigkeit gefahren werden. Der Tretkurbeltrieb greift in diesem Fall an der Freilaufnabe des Zusatzmotors an.

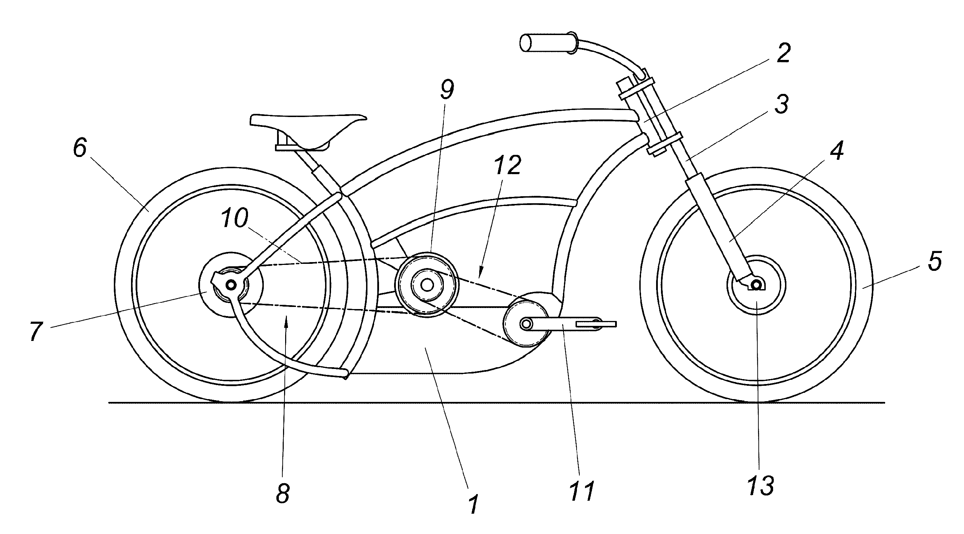

In der Zeichnung ist der Erfindungsgegenstand beispielsweise dargestellt, und zwar wird ein erfindungsgemäßes Fahrrad in einer schematischen Seitenansicht gezeigt.

Das dargestellte Fahrrad weist einen Gestellrahmen 1 mit einem Lager 2 für eine Lenksäule 3 auf, die eine Lagergabel 4 für ein Vorderrad 5 trägt. Das im Gestellrahmen 1 gelagerte Hinterrad 6 ist mit einem Radnabenmotor 7 versehen, an dem die Speichen des Hinterrads 6 angreifen, was jedoch aus Übersichtlichkeitsgründen nicht dargestellt ist. Der Radnabenmotor 7 ist über ein Übersetzungsgetriebe 8 mit einem am Gestellrahmen 1 abgestützten Zusatzmotor 9 gleicher Baugröße verbunden, wobei das als umlaufender Zugmitteltrieb 10 mit einer Kette oder einem Zahnriemen als Zugmittel ausgebildete Übersetzungsgetriebe 8 an der Freilaufnabe des Radnabenmotors 7 angreift. Die im Gestellrahmen 1 gelagerte Tretkurbel 11 des Tretkurbeltriebs 12 ist über ein umlaufendes Zugmittel mit der Freilaufnabe des Zusatzmotors 9 antriebsverbunden. Es ist aber auch möglich, den Zusatzmotor 9 dem Tretkurbellager zuzuordnen, sodass ein umlaufendes Zugmittel zwischen dem Tretkurbeltrieb 12 und der Freilaufnabe des Zusatzmotors 9 zur Antriebsverbindung entfallen kann und die Tretkurbelwelle koaxial zur Motorwelle verläuft.

Da gemäß dem dargestellten Ausführungsbeispiel der Radnabenmotor 7 aufgrund des gewählten Übersetzungsverhältnisses des Übersetzungsgetriebes 8 mit einer höheren Drehzahl als der Zusatzmotor 9 betrieben wird, können bei langsamen Fahrgeschwindigkeiten die hohen Drehmomente des Radnabenmotors 7 bei für einen stabilen Antrieb ausreichend hohen Drehzahlen genützt werden, die im Bereich des Zusatzmotors 9 unter Umständen die Antriebsstabilität nicht mehr gewährleisten könnten. Bei höheren Fahrgeschwindigkeiten werden dann die höheren Drehmomente des mit einer niedrigeren Drehzahl betriebenen Zusatzmotors 9 für den elektrischen Hilfsantrieb genützt. Voraussetzung ist hierfür ein ausreichend großes Übersetzungsverhältnis. Als vorteilhaft hat sich beispielsweise ein Übersetzungsverhältnis von 1:2 erwiesen.

Der elektrische Hilfsantrieb kann in herkömmlicher Weise durch den Tretkurbeltrieb 12 unterstützt werden. Zu diesem Zweck ist der Tretkurbeltrieb 12 mit der Freilaufnabe des Motors zu verbinden, der bei einer niedrigeren Drehzahl betrieben wird. Der Tretkurbeltrieb 12 ist zu diesem Zweck mit einer entsprechenden Übersetzung auszulegen.

Es braucht wohl nicht näher ausgeführt zu werden, dass auch das Vorderrad 5 über einen Radnabenmotor 13 angetrieben werden kann, wie dies in der Zeichnung angedeutet ist. In diesem Fall wird ein allradgetriebenes Fahrrad erreicht, das bei einer entsprechenden Ansteuerung des Radnabenmotors 13 für das Vorderrad 5 besonders gute Fahreigenschaften aufweist, ohne ein Schaltgetriebe vorsehen zu müssen.

## Patentansprüche

1. Fahrrad mit einem Tretkurbeltrieb (12) und mit einem an den Tretkurbeltrieb (12) angeschlossenen elektrischen Hilfsantrieb, der einen Radnabenmotor (7) mit einer Freilaufnabe für das Hinterrad (6) aufweist, **dadurch gekennzeichnet, dass** der Radnabenmotor (7) für das Hinterrad (6) über ein Übersetzungsgetriebe (8) mit einem elektrischen Zusatzmotor (9) gleicher Baugröße antriebsverbunden ist.

2. Fahrrad nach Anspruch 1, **dadurch gekennzeichnet, dass** das Übersetzungsgetriebe (8) als umlaufender Zugmitteltrieb (10) ausgebildet ist.

3. Fahrrad nach Anspruch 1 oder 2, **dadurch gekennzeichnet, dass** das Übersetzungsgetriebe (8) ein Übersetzungsverhältnis zwischen der Drehzahl des Radnabenmotors (7) für das Hinterrad (6) und der Drehzahl des Zusatzmotors (9) größer 1 aufweist.

4. Fahrrad nach Anspruch 3, **dadurch gekennzeichnet, dass** der Tretkurbeltrieb (12) über eine Freilaufnabe mit dem Zusatzmotor (9) antriebsverbunden ist.
